# EUROPEAN PATENT SPECIFICATION

(11) **EP 0 490 885 B1**
(45) Date of publication and mention of the grant of the patent: **20.12.1995**
(21) Application number: 92200687.9
(22) Date of filing: 18.10.1984
(51) Int. Cl.: B60R 13/08

(54) **Engine noise control device**
Kontrollvorrichtung für Motorengeräusche
Dispositif de contrôle du bruit d'un moteur

(30) Priority: 18.10.1983 JP 194855/83
(43) Date of publication of application: 17.06.1992
(62) Divisional of application: 84307194.5
(73) Proprietor: Bridgestone Corporation, Tokyo 104 (JP)
(72) Inventor: Mizuno, Keiichiro, Tokyo (JP); Iida, Kazuyoshi, Saitama Pref. (JP); Kondo, Kazuo, Tokyo (JP)
(74) Representative: Whalley, Kevin

(56) References cited:
- EP-A- 0 068 410
- FR-A- 2 312 831
- FR-A- 2 382 736
- FR-A- 2 479 324

## Description

The present invention relates to an engine noise control device for use in automobiles or the like as a countermeasure against noise pollution, and in particular aims to reduce the engine noise radiated and/or diffracted to the outside from the engine of an automobile.

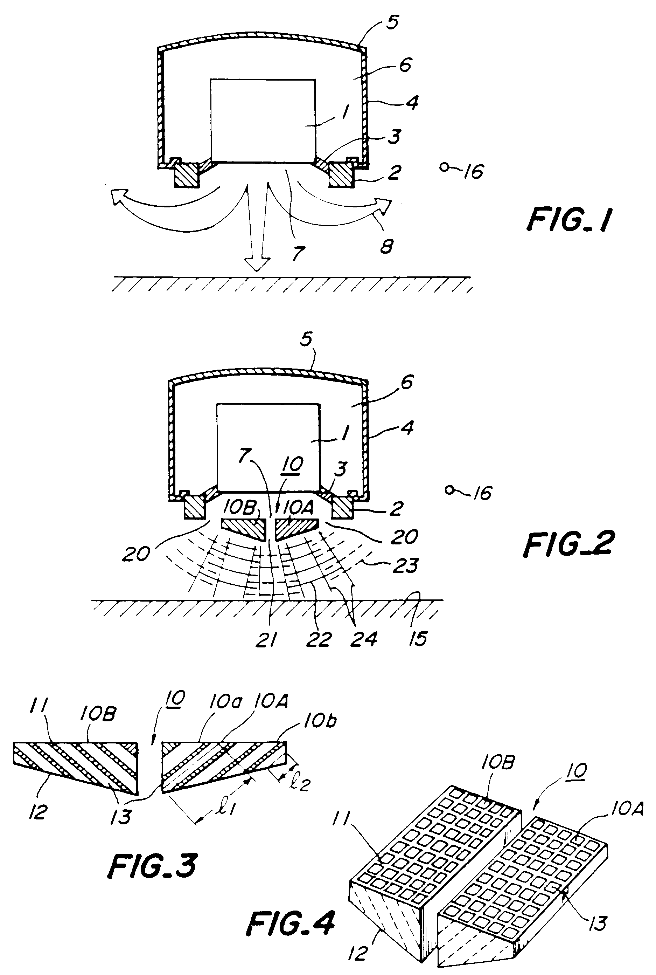

In general, as shown in Figure 1 of the accompanying drawings, which is a diagrammatic vertical sectional view of the engine area of an automobile, an engine 1 of the automobile is fitted onto frame side members 2 through mounts 3, and placed in an engine area 6 defined by a body 4 and a bonnet 5. The engine area 6 is open to the atmosphere through an opening 7 at the bottom portion of the engine area for radiating heat generated from the engine etc. Thus, noises (non-controlled sound waves) generated from the engine 1 are radiated and/or diffracted to the outside from the opening 7 as shown by reference numeral 8, thereby causing problems of noise pollution.

If the engine area opening is completely closed, such engine noise can be reduced to a large extent.

However, since the engine area opening must not be closed for the above-mentioned reason, conventionally a sound absorbing material has merely been attached to the inner surface of the bonnet 5 and the inner wall of the body 4, so that a large noise-reducing effect cannot be obtained.

In view of the above, an aim of the present invention is to provide an engine noise control device for use in an automobile or the like, in which the noise-propagating effect is modified or changed by controlling the noise to reduce the energy of sound radiated and/or diffracted to the outside.

It is another aim of the present invention to provide an engine noise control device for use in an automobile or the like, in which a destructive interference effect is induced due to the displacement in phase between controlled sound waves and non-controlled sound waves to reduce the noise to the outside of the automobile to a large extent.

The present invention provides an engine noise control device comprising an open portion in a vehicle engine compartment, and a noise control member attached to said open portion of the engine compartment and having a noise entering surface and a noise ejecting surface while being provided with a plurality of hollow conduit passages extending from the noise entering surface to the noise ejecting surface of the noise control member, the hollow conduit passages having a noise controlling effect, characterized in that the noise control member is divided into two portions and a space is formed therebetween whereby sounds controlled by passage through the hollow conduit passages of the noise control member and other sound radiated and/or diffracted from the interior of the engine compartment induce destructive interference; wherein the said divided portions of the noise control member are attached at the opening of the engine compartment side by side, while the space is defined between them such that the engine compartment communicates with the underside of the engine noise control device, each of said divided portions having a thickness which gradually decreases sideways and outwardly; and wherein a plurality of hollow parallel conduit passages is provided in each of said divided portions of the noise control member such that the conduit passages are inclined downwardly toward the central portion of the engine open area.

An engine noise control device according to the first part of claim 1 is described in FR-A-2 479 324.

According to a preferred aspect of the invention, there is provided an engine noise control device in which a part of the noise propagating from a noise source is passed through a plurality of hollow conduit passages having differences in the conduit passage length to control the lengths of the propagating paths of the noise passed through the hollow conduit passages, whereby the phase of the noise is displaced to induce a destructive interference phenomenon due to the interference between the controlled noise and the directly propagating non-controlled noise, thereby reducing the noise to a large extent.

The noise control member may be designed in a half cylindrical convex lens shape, or may be designed in a semi-spherical shape.

The invention will be further described, by way of example only, with reference to the accompanying drawings, wherein:
Figure 2 is a diagrammatic vertical sectional view of an engine area provided with a further embodiment of a noise control member according to the present invention;
Figure 3 is a vertical sectional view of the noise control member shown in Figure 2;
Figure 4 is a perspective view of the noise control member shown in Figure 2;
Figure 5 is a detailed view of an interfering portion between controlled sound waves and non-controlled sound waves in the embodiment shown in Figure 2;
Figures 6 - 8 are diagrammatic views illustrating various embodiments according to the present invention in which small obstacles are placed in hollow conduit passages;
Figure 9 is a diagrammatic view illustrating an experimental model device; and
Figure 10 is a graph showing experimental results obtained by the experimental model device.

In the drawings, like reference numerals indicate like parts.

Figure 2 shown an embodiment in which a noise control member 10 is attached to frame side members 2 such that the noise control member may be positioned in an engine area opening 7 at the bottom portion of an engine area 6.

The noise control member 10 has a plurality of conduit passages 13 having different conduit passage lengths and extending from the one surface 11 to the other surface 12 of the noise control member, and the conduit passages 13 are arranged parallel to one another such that the conduit passage length becomes shorter from the central portion 10a to the peripheral portion 10b of the noise control member as shown by the conduit passage lengths ℓ₁ and ℓ₂.

The noise control member 10 may be so designed that the one surface 11 is a flat plane and the other surface 12 is a half cylindrical convex lens shape forming an arch, or a semi-circular shape, or the one surface 11 is a flat plane and the other surface 12 is a semi-spherical convex lens shape forming a part of a sphere. Alternatively, the other surface 12 may be shaped as a convex lens. However, the preferred shape of the noise control member 10 is as shown in Figures 2 to 5.

When the noise control member 10 is attached to the engine area opening 7, the noise generated by the engine etc. in the engine area 6 enters the noise control member 10 from the flat incident surface 11 and passes through the interior of a plurality of the hollow conduit passages 13 having different conduit passage lengths respectively, so that the phases are displaced, and the noise is radiated from the sound wave radiation surface 12. Destructive interference is induced between the controlled sound with the phases thus displaced and the non-controlled and directly propagating sound directly radiated and/or diffracted from the interior of the engine area 6 to the outside through the space or another opening (not shown) present at the engine area opening 7. Consequently, the noise is reduced and directed to the radiation surface 12 of the noise control member 10 toward the ground surface 15, so that the energy of the sound is directed to the central portion under the chassis, and the degree at which the noise dissipates to the peripheral portion becomes smaller. Accordingly, the noise level at a position such as a noise-receiving position 16 located at the outside periphery of the engine area 6 can be remarkably lowered, whereas heat generated by the engine, water entering the engine area, or the like can be dissipated or discharged to the outside through the hollow conduit passages 13.

In the embodiment of Figure 2, the noise control member 10 is divided into two portions 10A and 10B on the central line thereof, which are fitted side by side at the engine area opening 7 by means of an appropriate support frame (not shown) such that they are spaced from the frame side members 2 and spaced at a given distance from each other. Thereby, spaces 20 and 21 are defined between the side frame members 2 and the divided portions 10A and 10B, and between the divided portions 10A and 10B themselves, respectively, whereby a part of the noise in the engine area 6 is directly radiated and/or diffracted to the outside of the engine area.

As shown in Figures 3 and 4, a plurality of hollow conduit passages 13 having different conduit passage lengths are arranged parallel to one another in each of the portions 10A and 10B of the noise control member in such a manner that the conduit passages extend from the incident surface 11 to the radiation surface 12 and the length of the conduit passages become shorter from the central portion 10a to the peripheral portion 10b of the engine area opening 7.

In the engine noise control device as shown in Figure 2, the controlled sound waves the phases of which are displaced while passing through the hollow conduit passages 13 at the portions 10A and 10B of the noise control member are propagated from the radiation surface 12 to the ground surface 15 as shown by solid lines 22. On the other hand, the non-controlled sound waves directly radiated and/or diffracted to the outside of the engine area through the spaces 20 and 21 are propagated as shown by broken lines 23. Consequently, interference regions are formed as shown by lines 24.

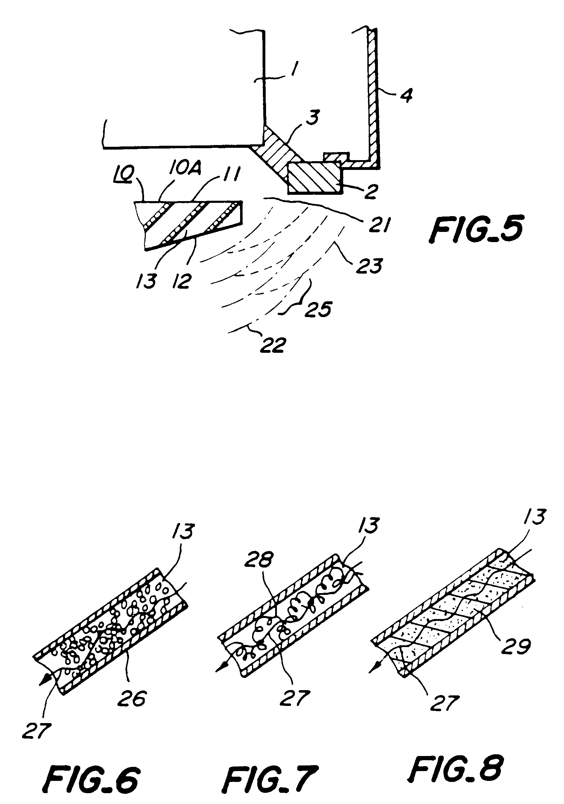

Figure 5 shows a detail of the interference portion between the controlled sound waves 22 passing through the portion 10A of the noise control member and the non-controlled sound waves 23 radiated and/or diffracted from the space 21 between the frame side member 2 and the portion 10A of the noise control member, and the interfered waves are shown by reference numeral 25.

Desired differences in conduit passage length can be obtained even within a restricted thickness by disposing a plurality of small obstacles in the interiors of the hollow conduit passages 13 of the noise control member 10 and increasing the number of the obstacles from the peripheral portion to the central portion.

Figures 6 - 8 show various embodiments in which small obstacles are disposed in the interiors of the hollow conduit passages 13. Figure 6 is an embodiment in which fine particles 26 are charged into the hollow conduit passages 13. Figure 7 is an embodiment in which rigid fibrous material 28 is charged into the hollow conduit passages 13. Figure 8 is an embodiment in which a porous material 29 such as ceramic foam is charged to form roundabout space passages 27 By disposing the small obstacles in the hollow passages as mentioned above, the length of sound-propagation paths becomes larger in the case of a thinner noise control member to increase the control performance of the low frequency wave.

As the material constituting the noise control member, any material including metals and polymer materials may be used as long as it has certain sound insulating properties.

The invention will be described more in detail with reference to the following example.

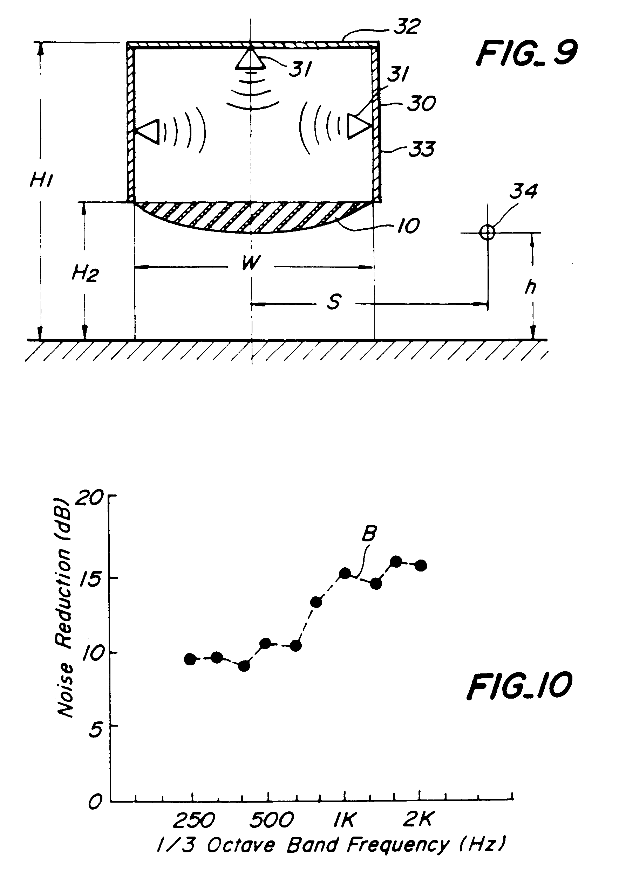

Figure 9 shows a diagrammatic view of an experimental device which was used in a laboratory test by employing an engine area model of an automobile. In the figure, reference numeral 30 is a wood box corresponding to the chassis of the automobile, and reference numerals 31 are sound source speakers producing white noise, which are attached to the interior of a top wall 32 and a side wall 33. A convex lens shape noise control member 10 is fitted to the lower end of the side wall 33. The width W of the wood box 30 was 1,000 mm, the height H₁ from the ground surface to the top wall 32 was 1,100 mm and the height H₂ from the ground surface to the lower end of the side wall 33 was 500 mm.

A ground receiver (microphone) 34 is disposed at a position a horizontal distance S from the central line of the wood box 30 and a height h from the ground surface, and the white noise was outputted from the speaker 31. The sound pressure level was measured by the microphone 34 with respect to cases where the noise control member was installed or where no noise control member was installed, and the noise reduction effects obtained by the noise control member 10 are as shown in Figure 10. In this figure, B indicates the case in which the noise control member of the embodiment shown in Figure 2 was employed.

From the results, it was confirmed that a considerably large noise reduction effect can be obtained from a low frequency to a high frequency by a noise control member according to the present invention.

As mentioned above, the present invention has the effects that noise radiated to the outside from an engine area can be largely reduced, while the heat radiation and water discharge are not interrupted.

## Claims

1. An engine noise control device comprising an open portion (7) in a vehicle engine compartment (6), and a noise control member (10) attached to said open portion of the engine compartment and having a noise entering surface (11) and a noise ejecting surface (12) while being provided with a plurality of hollow conduit passages (13) extending from the noise entering surface to the noise ejecting surface of the noise control member, the hollow conduit passages having a noise controlling effect, characterized in that the noise control member is divided into two portions (10A, 10B) and a space (21) is formed therebetween whereby sounds controlled by passage through the hollow conduit passages of the noise control member and other sound radiated and/or diffracted from the interior of the engine compartment induce destructive interference; wherein the said divided portions (10A, 10B) of the noise control member (10) are attached at the opening (7) of the engine compartment (6) side by side, while the space (21) is defined between them such that the engine compartment communicates with the underside of the engine noise control device, each of said divided portions (10A, 10B) having a thickness which gradually decreases sideways and outwardly; and wherein a plurality of hollow parallel conduit passages (13) is provided in each of said divided portions (10A, 10B) of the noise control member (10) such that the conduit passages are inclined downwardly toward the central portion of the engine open area.

2. An engine noise control device as claimed in Claim 1, characterized by a space (20, 21) through which noise can directly propagate to the outside of the compartment (6) formed at the engine opening (7) at which the noise control member (10) is attached.

3. An engine noise control device as claimed in Claim 1, characterized in that a space (20) is further defined between each of the two portions (10A, 10B) of the noise control member and frame side members (2) which are attached to the opening of the engine compartment and support an engine (1) in the engine compartment.

4. An engine noise control device as claimed in any of Claim 1 to 3, characterized in that the conduit passages are obliquely arranged in parallel in a lattice fashion in each of the said two portions (10A, 10B).

5. An engine noise control device as claimed in any of Claims 1 to 4, characterized in that the noise control member is positioned at the bottom of the engine compartment, so that the sound is directed to the central portion under the chassis.

6. An engine noise control device as claimed in any of Claims 1 to 5, characterized in that the noise control member is designed in a half cylindrical convex lens shape.

7. An engine noise control device as claimed in any of Claims 1 to 5, characterized in that the noise control member is designed in a semi-spherical shape.

8. An engine noise control device as claimed in any of Claims 1 to 7, characterized in that small obstacles are disposed in the interiors of the conduit passages.

9. An engine noise control device as claimed in Claim 8, characterized in that the small obstacles are made of fine particles (26), rigid fibrous material (28), or porous material (29).

10. An engine noise control device as claimed in Claim 8 or 9, characterized in that the number of the obstacles is increased from the peripheral portion to the central portion.

11. An engine noise control device as claimed in Claim 8 or 9, characterized in that the obstacles are adapted to enhance the control performance of low frequency wave lengths.

## Patentansprüche

1. Kontrollvorrichtung für Motorengeräusche mit einem offenen Abschnitt (7) in einem Fahrzeugmotorabteil (6) und einem Geräuschkontrollglied (10), das an dem offenen Abschnitt des Motorabteils befestigt ist und eine Geräuscheintrittsfläche (11) sowie eine Geräuschaustrittsfläche (12) hat, während es mit einer Vielzahl von hohlen Leitungsdurchlässen (13) versehen ist, die von der Geräuscheintrittsfläche zur Geräuschaustrittsfläche des Geräuschkontrollgliedes reichen, wobei die hohlen Leitungsdurchlässen einen Geräuschkontrolleffekt haben, dadurch gekennzeichnet, daß das Geräuschkontrollglied in zwei Abschnitte (10A, 10B) unterteilt ist, und daß ein Raum (21) dazwischen gebildet wird, wodurch der Schall, der durch ein Hindurchgehen durch hohle Leitungsdurchlässe des Geräuschkontrollgliedes kontrolliert wird, und ein weiterer Schall, der vom Inneren des Motorraumes abgestrahlt und/oder gebeugt wird, eine auslöschende Interferenz hervorrufen; worin die unterteilten Abschnitte (10A, 10B) des Geräuschkontrollgliedes (10) in der Öffnung (7) des Motorraumes (6) nebeneinander befestigt sind, während der Raum (21) zwischen ihnen so abgegrenzt ist, daß der Motorraum mit der Unterseite der Kontrollvorrichtung für Motorengeräusche in Verbindung steht, wobei ein jeder der unterteilten Abschnitte (10A, 10B) eine Dicke aufweist, die allmählich nach der Seite und nach außen zu abnimmt; und worin eine Vielzahl von hohlen, parallelen Leitungsdurchlässen (13) in jedem der unterteilten Abschnitte (10A, 10B) des Geräuschkontrollgliedes (10) vorhanden ist, so daß die Leitungsdurchlässe nach unten zu in Richtung des mittleren Abschnittes des offenen Motorbereichs geneigt sind.

2. Kontrollvorrichtung für Motorengeräusche nach Anspruch 1, gekennzeichnet durch einen Raum (20,21), durch den sich das Geräusch direkt zur Außenseite des Motorraumes (6) hin ausbreiten kann, und der in der Motoröffnung (7) gebildet wird, in der das Geräuschkontrollglied (10) befestigt ist.

3. Kontrollvorrichtung für Motorengeräusche nach Anspruch 1, dadurch gekennzeichnet, daß außerdem ein Raum (20) zwischen einem jeden der zwei Abschnitte (10A, 10B) des Geräuschkontrollgliedes und den Rahmenseitengliedern (2) abgegrenzt wird, die an der Öffnung des Motorraumes befestigt sind, und die einen Motor (1) im Motorraum tragen.

4. Kontrollvorrichtung für Motorengeräusche nach einem der Ansprüche 1 bis 3, dadurch gekennzeichnet, daß die Leitungsdurchlässe schräg, parallel in der Form eines Gitters in jedem der zwei Abschnitte (10A, 10B) angeordnet sind.

5. Kontrollvorrichtung für Motorengeräusche nach einem der Ansprüche 1 bis 4, dadurch gekennzeichnet, daß das Geräuschkontrollglied am Boden des Motorraumes angeordnet ist, so daß der Schall zum mittleren Abschnitt unter dem Chassis gelenkt wird.

6. Kontrollvorrichtung für Motorengeräusche nach einem der Ansprüche 1 bis 5, dadurch gekennzeichnet, daß das Geräuschkontrollglied in Form einer halben zylindrischen, konvexen Linse konstruiert ist.

7. Kontrollvorrichtung für Motorengeräusche nach einem der Ansprüche 1 bis 5, dadurch gekennzeichnet, daß das Geräuschkontrollglied in halbkugeliger Gestalt gebaut ist.

8. Kontrollvorrichtung für Motorengeräusche nach einem der Ansprüche 1 bis 7, dadurch gekennzeichnet, daß im Inneren der Leitungsdurchlässe kleine Hindernisse angeordnet sind.

9. Kontrollvorrichtung für Motorengeräusche nach Anspruch 8, dadurch gekennzeichnet, daß die kleinen Hindernisse aus kleinen Partikel (26), steifem, fasrigen Material (28) oder porösem Material (29) gefertigt sind.

10. Kontrollvorrichtung für Motorengeräusche nach Anspruch 8 oder 9, dadurch gekennzeichnet, daß die Anzahl der Hindernisse vom Umfangsabschnitt zum Mittelabschnitt hin anwachst.

11. Kontrollvorrichtung für Motorengeräusche nach Anspruch 8 oder 9, dadurch gekennzeichnet, daß die Hindernisse befähigt sind, die Kontrolleistung von Niederfrequenzwellenlängen zu verbessern.

## Revendications

1. Dispositif de contrôle du bruit produit par le moteur, comprenant une portion ouverte (7) dans un compartiment (6) réservé au moteur du véhicule, ainsi qu'un élément de contrôle du bruit (10) fixé à ladite portion ouverte du compartiment du moteur et possédant une surface (11) par laquelle pénètre le bruit et une surface (12) par laquelle s'évacue le bruit, tout en étant muni de plusieurs passages (13) en forme de conduits creux s'étendant depuis la surface de l'élément de contrôle du bruit, par laquelle pénètre le bruit jusqu'à la surface de l'élément de contrôle du bruit, par laquelle s'évacue le bruit, les passages en forme de conduits creux exerçant un effet de contrôle du bruit, caractérisé en ce que l'élément de contrôle du bruit est divisé en deux parties (10A, 10B), un espace (21) étant formé entre celles-ci, si bien que les sons contrôlés par le passage à travers les passages en forme de conduits creux de l'élément de contrôle du bruit et les autres sons rayonnés et/ou diffractés depuis l'intérieur du compartiment du moteur induisent une interférence destructive; dans lequel lesdites parties divisées (10A, 10B) de l'élément de contrôle du bruit (10) sont fixées côte à côte au niveau de l'ouverture (7) du compartiment du moteur (6), un espace (21) étant défini entre elles, si bien que le compartiment du moteur communique avec le côté inférieur du dispositif de contrôle du bruit, chacune desdites parties divisées (10A, 10B) ayant une épaisseur se réduisant progressivement vers les côtés et vers l'extérieur; et dans lequel plusieurs passages parallèles en forme de conduits creux (13) sont agencés dans chacune desdites parties divisées (10A, 10B) de l'élément de contrôle du bruit (10), les passages en forme de conduits étant ainsi inclinés vers le bas en direction de la partie centrale de la zone ouverte réservée au moteur.

2. Dispositif de contrôle du bruit produit par le moteur selon la revendication 1, caractérisé par un espace (20, 21) permettant la propagation directe du bruit vers l'extérieur du compartiment (6) formé au niveau de l'ouverture du moteur (7) sur laquelle est fixé l'élément de contrôle du bruit (10).

3. Dispositif de contrôle du bruit produit par le moteur selon la revendication 1, caractérisé en ce qu'un espace (20) est en outre défini entre chacune des deux parties (10A, 10B) de l'élément de contrôle du bruit et les éléments latéraux du cadre (2), fixés à l'ouverture du compartiment du moteur et supportant un moteur (1) dans le compartiment du moteur.

4. Dispositif de contrôle du bruit produit par le moteur selon l'une quelconque des revendications 1 à 3, caractérisé en ce que les passages en forme de conduits sont disposés en oblique parallèlement les uns aux autres, en forme de treillis, dans chacune desdites deux parties (10A, 10B).

5. Dispositif de contrôle du bruit produit par le moteur selon l'une quelconque des revendications 1 à 4, caractérisé en ce que l'élément de contrôle du bruit est positionné au fond du compartiment du moteur, si bien que le bruit est dirigé vers la partie centrale au-dessous du châssis.

6. Dispositif de contrôle du bruit produit par le moteur selon l'une quelconque des revendications 1 à 5, caractérisé en ce que l'élément de contrôle du bruit est conçu en une forme de demi-lentille cylindrique convexe.

7. Dispositif de contrôle du bruit produit par le moteur selon une quelconque des revendications 1 ou 5, caractérisé en ce que l'élément de contrôle du bruit est conçu en une forme semi-sphérique.

8. Dispositif de contrôle du bruit produit par le moteur selon l'une quelconque des revendications 1 à 7, caractérisé en ce que de petits obstacles sont disposés à l'intérieur des passages en forme de conduits.

9. Dispositif de contrôle du bruit produit par le moteur selon la revendication 8, caractérisé en ce que les petits obstacles sont réalisés en fines particules (26), en une matière fibreuse rigide (28) ou en une matière poreuse (29).

10. Dispositif de contrôle du bruit produit par le moteur selon la revendication 8 ou 9, caractérisé en ce que le nombre des obstacles augmente depuis la portion périphérique jusqu'à la portion centrale.

11. Dispositif de contrôle du bruit produit par le moteur selon la revendication 8 ou 9, caractérisé en ce que les obstacles sont conçus pour augmenter la performance de contrôle des ondes basse fréquence.
